# EUROPEAN PATENT SPECIFICATION

(11) **EP 0 550 445 B1**
(45) Date of publication and mention of the grant of the patent: **28.06.1995**
(21) Application number: 91913611.9
(22) Date of filing: 25.07.1991
(51) Int. Cl.: A23P 1/08, A21D 13/08

(54) **MOISTURE BARRIER FILM**
FEUCHTIGKEITSFESTER FILM
PELLICULE DE PROTECTION CONTRE L'HUMIDITE

(30) Priority: 25.07.1990 GB 9016340
(43) Date of publication of application: 14.07.1993
(73) Proprietor: DEVRO LIMITED, Glasgow, G69 0JE, Scotland (GB)
(72) Inventor: TANNER, Alistair, Gilmour 10 Dougalston Crescent, Glasgow G62 6HP (GB); HARVEY, Wilson, Stirling FK8 3AX (GB)
(74) Representative: Fisher, Adrian John
(86) International application number: GB9101244
(87) International publication number: WO9201394

(56) References cited:
- EP-A- 0 383 134
- WO-A-86/00501
- FR-A- 2 097 896
- WORLD PATENTS INDEX, Derwent Publications Ltd., London, GB; AN 78-16712A(09) & JP,A,53 005 270 (SUMITOMO BAKELITE) 18 January 1978 see abstract
- WORLD PATENTS INDEX, Derwent Publications Ltd., London, GB; AN 77-52921Y(30) & JP,A,52 070 039 (SUMITOMO BAKELITE) 10 June 1977, see abstract
- WORLD PATENTS INDEX, Derwent Publications Ltd., London, GB; AN 72-43987T(27) & JP,B,47 023 384 (NITTA ZERACHIN) 1972 see abstract

## Description

This invention relates to a moisture barrier film, and more particularly to an edible film which is suitable for use as a moisture barrier in food products.

Films have been used in food preparations for various reasons for centuries. These applications include the protection of raw and cooked foods, the containment of wet foods and flavours, the separation of wet from dry foods, and the preventing of drying. Examples of the use of natural films in food products are sheep/hog stomach for wrapping comminuted meat as in haggis, and the use of intestines for the manufacture of sausages (see Tannahill, R., "Food in History", pub. Stein & Day, NY.). In this century, the evolution of plastics films and plastics laminates has allowed a great diversification in food wrapping for the purposes of protection from gross and microbial contamination, inhibition of oxidation, and containment (see Daniels J.A. *et al* (1985) J. Food Protect. 48, 532; Neilsen, H.J.S. (1983) J. Food Protect. 46, 693; and Jantavat, R. & Dawson, L.E. (1980) Poultry Sci. 59, 1053).

Collagen, a naturally occurring connective tissue protein, has been used for the manufacture of food wrapping films on a commercial basis. Films of this type are disclosed, for example, in US-A-3664844 and US-A-3529530. The benefits of using collagen for the manufacture of food films are that it is a natural product, the chemistry of which is well understood (see Ramachandran, G.N. & Reddi, A.H. (eds.) (1976) "Biochemistry of Collagen", pub. Plenum Press, NY. & London), it can be readily comminuted and converted to a viscous gel or mass and it can be extruded in a number of forms including films (see Chvapil, M. (1979) in "Fibrous Proteins: Scientific, Industrial and Medical Aspects", Vol. 1, pp. 247 *et seq* (D. Parry & L. Creamer, eds.), pub. Academic Press, NY. & London). Collagen films are also machinable (in the sense that they can readily be reeled, cut and handled by machinery), and they may be used in the preparation of heat-sealed pouches.

International Patent Application No.WO-A-8802991 discloses an alternative film derived from soya protein, casein, albumin or gelatine with polysaccharides such as gum arabic and starch. Such a film, like conventional collagen films, is moisture-permeable.

Moisture-impermeable films have also been widely used in the food industry. These include, for example, the plastics food wrappings already mentioned above. Much earlier examples include the use by the ancient Chinese of edible wax coatings on fruit to prevent drying during storage and the use of fat wrappings (lardings) in 16th century Britain.

More recently, a non-edible, disposable food wrap made from a laminate of saccharides and vinylon film has become available from Showa Denko K.K. of Japan. This film is said to absorb moisture, thereby limiting moisture migration.

Japanese Patent No. 301387 (Kanebo K.K.) describes a zeolite-based non-edible film with moisture absorbing ability which is claimed to extend shelf-life.

Some attempts have also been made in recent years to produce commercially viable films which are both edible and moisture-impermeable. For example, wax and protein sprays have been used in the bakery industry, but with little success.

The combination of fatty acids and modified cellulose with wax layers has been reported for use as a moisture barrier film (see Kamper, S.L & Fennema, O. (1984) J. Food Sci. 49, 1478 and 1482; and (1985) J. Food Sci. 50, 382; Kester, J.J. & Fennema, O. (1989) J. Food Sci. 54, 1383 and 1390; and Greener, I.K. & Fennema, O. (1989) J. Food Sci. 54, 1393 and 1400). However, such cellulose-based films have low strength and poor handling characteristics.

WO-A-8600501 discloses or film formed from an edible hydrophobic protein or carbohydrate, coated with an edible hydrophobic material.

EP-A-0269460 describes a collagen film coated with a fine layer of emulsified animal fat as a wrap for meat products which prevents moisture loss. This product is a combination of the film wrap and larding techniques and is only applicable to meat "logs" or round joints.

According to the present invention, there is provided a film comprising an edible, insoluble fibrous protein and an edible polysaccharide, said film having a coating of an edible hydrophobic material on at least a portion of a surface thereof.

The invention thus provides an edible film which is at least partially moisture-impermeable. Preferably, the film is coated with the hydrophobic material over substantially the whole (for example, greater than 95%) of at least one surface, such that the film is substantially completely moisture-impermeable. By way of example, the film may have a moisture permeability of less than 5g/m²/day/mm Hg, and more preferably less than 2 g/m²/day/mm Hg. If desired, the film may be coated with the same or different hydrophobic materials on the two major surfaces thereof.

The moisture permeability of the films of the invention may be measured by maintaining a difference in water vapour pressure across the film, and then measuring the mass of water which passes across the film per unit area. A suitable technique (and the one used herein) is that described by Kester & Fennema, (1989) J. Food Sci. 54, p.1384, modified in that water vapour pressure in the container is maintained at zero by means of anhydrous silica gel, rather than anhydrous calcium chloride. The film is sealed over 100ml glass jars each containing approximately 20g of preweighed silica gel, and exposed to a saturated atmosphere of water vapour in air in a desiccator at 20 °C. The rate of water vapour transmission through the film is calculated from the weight gain in the silica gel after 48 hrs exposure.

The edible, moisture-impermeable films of the invention are of value in a variety of applications in the food industry. One such application is in the manufacture of foods which contain both wet and dry domains. Examples of such foods include most bakery, pie-type products (such as quiche lorraine, meat pies, fruit pies and pasties), and also pizzas. A quiche filling may typically have a water activity (Aw) of 0.97 - 0.99, while the pastry base may have a water activity of 0.92 to 0.98. In such products it is common in industry for the filling and pastry to be cooked together in the final product. Such products, therefore, have wet and dry domains in close contact and this can cause problems on storage. Moisture from the wet domain can easily migrate into the dry domain (the pastry), thus wetting it and making it more susceptible to microbial spoilage and at the same time making it organoleptically less acceptable. Such reactions cause a lowering of the viable shelf-life of pies and related products, so that, for example, some superior products of this type may have a chilled shelf-life of only 24 hours. The film of the present invention, providing as it does an effective barrier between the wet and dry domains of mixed food products, considerably enhances the shelf-life of such products.

The protein component of the film of the invention is important because it helps to maintain the integrity of the film during cooking, so that the moisture-barrier properties are retained even after cooking. This is in contrast to the fatty acid/modified cellulose films of the prior art, which are dissipated on cooking, and which are therefore useful as moisture barriers only for uncooked products. Moreover, the films of the invention are extrudable, and have better handling properties (including increased tensile strength and tear strength) in comparison to such prior art films.

Surprisingly, the films of the invention are generally undetectable (whether visually or organoleptically) in the cooked products. Moreover, the films of the invention are of low cost and are readily handled by machinery.

Other applications of the films of the invention include the formation of pouches which can be used for portion control in the manufacture of pies and similar food products. Of particular advantage in this application is that the films may be heat-sealable.

The edible fibrous protein which is used in the film of the invention is insoluble. Examples of suitable fibrous proteins are collagen, keratin and elastin, of which collagen is preferred. The protein may be used in its natural form, or it may be physically or chemically modified prior to use. For example, the fibre length of a fibrous protein may be reduced to less than 0.1mm by physical means such as by forming a fibre gel and then homogenising the gel.

Chemical modification of the protein may include cross-linking by agents such as aldehydes (e.g. glutaraldehyde or reducing sugars), and aluminium salts. Two or more chemical modifications may be used in combination. For example, collagen may be hydrolysed with acid or alkali to form gelatin, and subsequently cross-linked to reduce its solubility during cooking.

When collagen is used as the edible protein, it may suitably be obtained from limed bovine corium, i.e. the inner layer of the skin of male or female cattle, which has been dehaired and limed using standard commercial procedures. The material may be supplied as whole hide-sized pieces, or may be substituted by any other bovine corium material from any part of the whole hide, e.g. belly "splits", hide off-cuts. Other hide materials can be substituted for this raw material including the hides of any of the domestic meat animals, e.g. pig, sheep, deer, goat, chicken, turkey and other species commonly used for food in various parts of the world e.g. the skin of fish or kangaroo.

The polysaccharide is preferably film-forming and soluble. Examples include charged polysaccharides (e.g. pectin, alginates, agars, carageenans, and chitosan), gums (e.g. arabic, acacia, tragacanth, locust bean and guar), and modified celluloses (e.g. cellulose ethers such as methylcellulose, ethylcellulose, hydroxymethylcellulose, hydroxyethylcellulose, hydroxypropylmethylcellulose, hydroxypropylethylcellulose and carboxymethylcellulose). Starches such as corn flour, crystal gum™, Dry-Flow™, and National Starch B38™ may alternatively be used. The preferred polysaccharide is hydroxypropylmethylcellulose (HPMC).

The hydrophobic material should preferably be tasteless, odourless, solid at room temperatures, and pliable, resisting cracking and flaking when the coated film is manipulated. Suitable hydrophobic materials include edible oils and waxes, such as coconut oil, palm oil, palm kernel oil, esterified glycerides and acetylated monoglyceride (Dynacet) and glycerol monostearate, calcium and sodium stearoyl lactate, polyglycerol ester and beeswax. Acetylated monoglyceride is preferred.

The film will generally contain protein in an amount of from 5 to 75%, more preferably from 15 to 35%, and most preferably from 20 to 30% by weight of protein plus polysaccharide. The film may additionally contain plasticisers, flavourings, colourings and preservatives. The protein and polysaccharide contents of the uncoated film, including plasticisers and other components, will usually each be from 3.5 to 60% by weight. More usually said protein content will be from 12 to 25% by weight, and most preferably from 15 to 22.5% by weight.

Suitable plasticisers include glycerol, sorbitol and polyethylene glycol, in amounts up to 40% by weight of the uncoated film. Preferably, the film contains plasticiser in an amount of from 5 to 30% (and more preferably from 20 to 30%) by weight of the uncoated film.

Flavourings for the film include artificial and naturally occurring flavours, spices and herbs. Suitable colourings include caramel and other permitted artificial or natural food dyes, and are generally employed in amounts less than 5% by weight of the uncoated film. Preservatives, such as propionic acid, sorbic acid, sodium nitrate and sodium nitrite, will usually constitute less than 1% by weight of the uncoated film.

The film may be formed by extrusion from a collagen/polysaccharide gel. The gel preferably has a solids content in the range 2 to 10%, and more preferably in the range 4 to 7%. After extrusion, the gel film is dried by any suitable means, such as by hot air. Preferably, the film is then brought up to a pH of from 6 to 8 by passage through an atmosphere of ammonia.

The hydrophobic material will generally be applied to the film in an amount of from 10 to 50 g/m², and more preferably from 20 to 40 g/m² of film surface, to produce a coating which is from 10 to 50 micrometers thick. Suitable coating techniques include dipping and brushing, but it is preferred to apply the coating by means of a heated roller or spray.

The films of the invention, and methods for their manufacture, are now further illustrated by reference to the following example, and to the Figures, in which:
Figure 1 is a graph showing the results of penetrometer studies of the pastry base of a quiche prepared with the film of the present invention, and
Figure 2 is a graph showing the effect of the film of the invention on the moisture content of quiche pastry.

### EXAMPLE

### 1. Washing and decalcification of hides

Limed bovine corium (or other suitable collagen source) is placed in a large rotating vessel, e.g. a stainless steel Challenge-Cooke mixer or any other similar devices for freely mixing the raw material with water and other solvents to aid rapid washing/decalcification. Several deliming agents which remove chemically deposited and chemically bound lime by conversion into readily soluble salts can be utilized, e.g. ammonium sulphate, CO₂ deliming systems, hydrochloric acid, malic acid, acetic acid, lactic acid, citric acid-sodium citrate, or ammonium chloride.

The temperature of the system should be less than 20°C. The procedure is continued until the final liquor pH is approximately 4.5 - 5. The hides are then washed in water and drained. The washed hides may then be stored at 2 -10°C or deep frozen until required. The temperature of all solvents at all stages should be less than 20 °C.

### 2. Grinding

The washed, decalcified and salted raw material is passed through a grinder for initial comminution. The whole pieces of corium are fed continuously into a grinding device such as a Weiler or Wolfking industrial food grinder. The material is passed through a plate or plates with 5mm-10mm holes such that 100% of the material is comminuted into approximately 5mm-10mm sized pieces of wet grind. The temperature of the material should be minimised at this stage. This wet grind is then transferred immediately to the next stage.

### 3. Comminution and mixing

The grind is pumped with water directly from the Wolfking or Weiler grinder to a hide and water holding tank. The resulting slurry is further comminuted by passing through Karl Schnell Mincemasters using plate sizes in the range of 1-5mm or through a Stephan Microcut. The temperature rise is minimised at this stage and the resultant collagen pulp stored in the pulp holding tank. Food grade hydrochloric acid, glycerol, sorbitol and optionally aluminium sulphate are then charged to a second holding tank (Acid Tank), together with water and ice. Suitable final concentrations in solution of these components are within indicated ranges:

| | |
|---|---|
| hydrochloric acid | .075 - 1.0% |
| glycerol | .5 - 1.0% |
| sorbitol | 4 - 6% |
| aluminium sulphate | .005 - .01% |

The contents of the pulp tank and acid tank are blended together using a Stephan Microcut or similar high shear mixer or a Nauta mixer. The desired gel constituents are obtained and the resultant gel is stored in a blend tank for a minimum of 12 hours.

### 4. Preparation of collagen/polysaccharide gel

The collagen gel thus obtained from the previous step is mixed in a Giusti pressure/mixing vessel, using iced water for cooling, with a solution of polysaccharide containing sufficient plasticiser to give a final solids content of 3.5% with a ratio of 25:75 collagen:polysaccharide by weight and the same final percentage of plasticiser as in the collagen only gel. Suitable polysaccharides include guar gum, locust bean gum, National Starch B38, crystal gum, "Dry-Flow", corn flour, methyl cellulose and hydroxypropyl methyl cellulose (HPMC), preferably HPMC.

The resulting gel is homogenised using a Cherry Burrell homogeniser with automatic pressure control (34.5 ± 1.4 MPa, ie 5000 ± 200psi, with a minimal temperature rise) and passed into a line tank at a minimum of -730mm Hg via a deaerating distributor. The tank is pressurised to 270 kPa (2.7 Bar) and the gel then passed through two gel filters. Four filter banks are used to allow changing of gel filters - 2 for the first filter (placed in parallel) and 2 for the second filter (placed in parallel). The first and second filters should be placed in series, and the gel filters should be capable of retaining particles greater than 0.076mm (0.003'').

### 5. Extrusion

The gel is transferred directly to an extruder. For extrusion, the gel is maintained at a maximum temperature of 19 ± 4°C) and extruded at 345 kPa (50 psi) onto a suitable conveyor, such as a PTFE (polytetrafluorethylene) coated glass fibre belt. The film is then batch-dried on the conveyor at 45°C for approximately 20 mins.

### 6. Hydrophobic coating

A hydrophobic layer is applied to one surface of the film using a heated roller loaded with the coating material, producing an even coating approximately 12.5 micrometres (0.0005") thick. Materials tested were: coconut oil, beeswax, palm oil, palm kernel oil, acetylated monoglyceride (Dynacet), glycerol monostearate, calcium and sodium steroyl lactate and polyglycerol ester.

### 7. Cooking Trials

### (i) Quiches

Quiches were prepared in 200 mm or 140 mm diameter aluminium moulds

| Pastry ingredients: | % w/w |
|---|---|
| Flour, soft plain white | 58.7 |
| Margarine | 29.3 |
| Water, chilled | 11.7 |
| Salt | 0.3 |

Half the flour and all the margarine was blended in a food processor to form a smooth paste. The salt was dissolved in the water and creamed into the mixture. The other half of the flour was added and the mixture processed to a homogeneous ball of pastry. 250g or 120g of pastry was rolled by hand to 4mm thick and pressed into the mould and trimmed. The base of the pastry was pricked to prevent expansion of air bubbles distorting the pastry during cooking.

| Filling ingredients: | % w/w |
|---|---|
| Milk, skimmed | 74.8 |
| Eggs, whole | 24.9 |
| Salt | 0.3 |

The milk was heated to 50°C and the eggs and salt beaten in. 330g or 200g (for smaller quiches) of filling was added to the raw pastry base. In the experimental quiches, the pastry base was first covered with the film of the invention, with the hydrophobic surface uppermost. The quiches were cooked in a preheated oven (190°C) for 25 minutes, then the temperature reduced to 150°C for a further 15 minutes. The quiches were then removed, allowed to stand for 5 minutes, loosely covered with foil then chilled to 2°C in less than 90 minutes.

### (ii)Meat Pies

Pastry was made to the recipe described above, and 1400mm diameter aluminium moulds were lined with 4mm thick rolled pastry. 200g of commercial tinned meat filling in gravy was added directly to the pastry shell or retained within an experimental film pouch prior to placing in the shell. A top crust (80g of pastry) was placed on top of the pie. Pies were baked at 175°C for 35-40 minutes, allowed to cool to room temperature, then chilled to 5°C.

### 8. Assessments

### (i) Shrinkage

Any shrinkage of the film was detected visually on separation of the filling from the pastry base.

### (ii)Penetrometer Studies

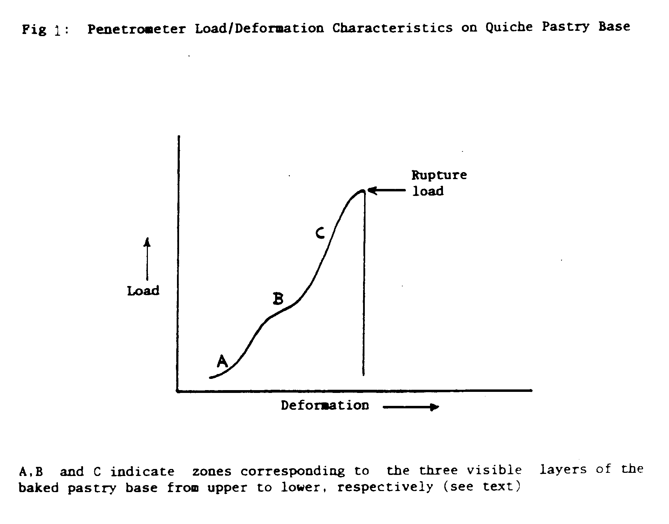

A characteristic of the pastry base which varies with moisture content is the resistance to deformation under applied pressure. This was measured in 50mm discs cut out of the pastry after removal of the filling, using a Lloyd tensile tester, type 5002, with an 8mm diameter probe attached to a 100 Newton load cell, crosshead speed 25mm per min. The characteristic of the stress/strain curve which was used was the peak height (Fig. 1), corresponding to "firmness" or resistance to penetration; this was expressed as Newtons (N).

### (iii) Moisture Content

The filling was separated from the pastry base and both were ground to homogeneity. 10g samples were weighed before and after heating at 80°C to constant weight (6h for pastry, 20h for filling). 5 replicate samples were taken from each pie or quiche.

### (iv) Sensory Assessment

A standard triangle taste for sensory difference was used with a randomly selected panel of 24 tasters. Samples of quiches were allocated random codes and the mode of presentation was balanced. Identification of one film-containing sample from two control samples was evaluated using the BS 5929, Part 1 (1980) test.

### 9. Results

### (i) Film Production

No problems were encountered with the production of collagen/polysaccharide films; all those produced had sufficient mechanical strength and flexibility for handling.

### (ii) Heat-sealing of Film

It was found possible to seal portions of pre-filling into film pouches, using a heated metal bar, prior to placing in the pie case.

### (iii) Shrinkage on Cooking

Collagen film with no polysaccharide component shrank during cooking in quiches, exposing the pastry base and allowing penetration of moisture from the filling. However, inclusion of polysaccharide in the collagen film substantially reduced this thermal shrinkage: Methocel showed no detectable shrinkage during cooking in quiches.

### (iv) Water Migration in Quiches

Examination of the pastry base typically showed three layers:
1. Closest to the filling was an opaque, white, soft, greasy layer.
2. A central layer which was white, dry and "crumbly" with small visible air spaces.
3. An outer layer, in contact with the cooking container, which was pale brown, dry and crumbly.

### (a) Moisture Content

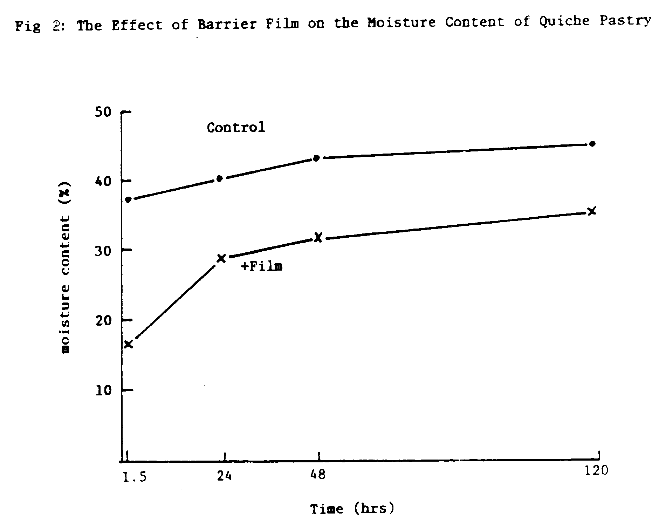

The migration of moisture from filling into the pastry base increased with time, illustrated by the change in water activity (Table 1). This change was confirmed by measurement of moisture content (Figure 2, upper curve).

Incorporation of the film of the invention into quiches significantly reduced the rate of moisture migration into the pastry, determined by moisture content. The results of comparative tests involving the use of films coated with different hydrophobic materials are set out in Table 2. The best results were obtained with acetylated monoglyceride as the hydrophobic material. Not only was this most effective in reducing water migration, but it also had the best characteristics for application, adherence, flexibility, taste and mouthfeel, and it was therefore used for all subsequent tests.

A further series of comparative tests showed that a film comprising hydroxypropylmethylcellulose as the polysaccharide component was more effective as a moisture barrier than similar films containing alternative polysaccharides (Table 3). HPMC was therefore used as the polysaccharide component in subsequent tests.

Figure 2 (lower curve) illustrates the reduced rate of water migration into the pastry base of a quiche in which the filling and the pastry base are separated by a film comprising collagen and HPMC, with a coating of acetylated monoglyceride.

### (b) Pastry Crispness

The load/deformation characteristics of the pastry base measured on a tensile tester are shown in Figure 1. The three regions of the curve, A, B and C, are thought to correspond to the three layers of the cooked pastry, described above. The mean rupture load of the pastry decreased during storage, but the decrease was significantly less in quiches incorporating the film when compared with controls (Table 4).

### (c) Taste Panel Assessments

The hedonic scores from a taste panel showed a clear improvement in "crispness" of the pastry in quiches with film (Table 5). The scores indicate consistently higher "brittleness" and lower "softness" for the film-containing samples.

### (v) Detectability of the Film

A taste panel assessment showed that a non-neutralised collagen film was detectable in quiches - due to its texture and "bitter" taste. However, a collagen/Methocel/Dynacet film which was neutralised after extrusion using ammonia was not detected by a significant proportion of tasters (10/24 compared with an expected 8/24 in the BS 5929 Part 1 "triangle" test, 1980).

### (vi) Effect of Film on Water Migration in Meat Pies

### (a) Moisture Content

The moisture content of the base crust in control pies rose by 5.1% between 24 and 48h, whereas the moisture content of pies containing film rose only 0.7% (Table 6). The top crusts, however, showed a similar rise in water content in control and film-containing pies.

### (b) Load/Deformation Properties

The rupture-load of the top and base crusts were measured 24 and 48h after cooking. The pies containing film showed a significantly lower rupture load then controls in the top crusts at both 24 and 48h, but a higher rupture load for the base crust (Table 7).

It will be appreciated that the present invention has been described above by way of example only, and that many variations are possible within the scope of the appendant claims.

**TABLE 1**

| Water activity* in quiche (without film) during storage | | |
|---|---|---|
| Time | Pastry | Filling |
| 90 minutes | 0.943 | 0.978 |
| 24 hours | 0.975 | 0.992 |
| 48 hours | 0.986 | 0.994 |
| 120 hours | 0.982 | 0.980 |

| | | |
|---|---|---|
| * Decagon CX-1 water activity meter, 19.8 - 21.3 °C | | |

**TABLE 2**

| Water uptake by pastry base of quiche with different film coatings | |
|---|---|
| Film coating | Water uptake (%) |
| None | 33 |
| Dynacet | 20 |
| Beeswax | 24 |
| Palm oil | 27 |
| Coconut oil | 28 |
| Palm kernel oil | 29 |

**TABLE 3**

| Water uptake by pastry base of quiche with different polysaccharides | |
|---|---|
| Polysaccharide component of film | Water uptake (%) |
| HPMC | 22 |
| Starch | 31 |
| Guar gum | 32 |
| Pectin | 34 |
| Control (no film) | 28 |

**TABLE 4**

| Force/deformation characteristics of quiche pastry during storage | | |
|---|---|---|
| Time | Rupture load | |
| | Control | Film |
| 90 minutes | 24.5 ± 9.6 | 20.0 ± 4.5 |
| 24 hours | 13.5 ± 7.0 | 15.0 ± 4.9 |
| 48 hours | 11.5 ± 2.3 | 15.3 ± 6.2* |
| 120 hours | 7.4 ± 1.6 | 15.0 ± 5.5* |

| | | |
|---|---|---|
| * indicates significant difference from control (p < 0.05) | | |

**TABLE 5**

| Taste panel hedonic scores for quiches during storage | | | | |
|---|---|---|---|---|
| Time | Softness* | | Brittleness* | |
| | Control | Film | Control | Film |
| 90 minutes | 4.0 | 4.9 | 3.7 | 2.4 |
| 24 hours | 2.8 | 3.5 | 4.4 | 4.0 |
| 48 hours | 2.8 | 3.0 | 5.0 | 4.7 |
| 120 hours | 2.2 | 2.1 | 5.8 | 6.3 |

| | | | | |
|---|---|---|---|---|
| * the higher the score, the less acceptable the product | | | | |

**TABLE 6**

| Moisture content (%) of meat filled pies during storage | | | | |
|---|---|---|---|---|
| Time | Base crust | | Top crust | |
| | Control | Film | Control | Film |
| 24 hours | 29.7 | 28.1 | 16.4 | 17.3 |
| 48 hours | 34.8 | 28.8 | 19.2 | 21.6 |

**TABLE 7**

| Rupture loads for meat pie crusts during storage | | | | |
|---|---|---|---|---|
| Time | Base crust | | Top crust | |
| | Control | Film | Control | Film |
| 24 h | 5.2 ± 0.9 | 8.7 ± 1.3* | 26.2 ± 11.0 | 13.8 ± 1.6* |
| 48 h | 6.6 ± 1.7 | 7.8 ± 1.3 | 26.3 ± 17.3 | 16.1 ± 6.3* |

| | | | | |
|---|---|---|---|---|
| * significantly different from control (p<0.05, n=6) | | | | |

## Claims

1. A film comprising an edible, insoluble fibrous protein or modified fibrous protein and an edible polysaccharide, said film having a coating of an edible hydrophobic material on at least a portion of a surface thereof.

2. A film according to claim 1, wherein the fibrous protein is collagen.

3. A film according to any preceding claim, wherein the polysaccharide is selected from charged polysaccharides, gums and modified celluloses.

4. A film according to claim 3 wherein the polysaccharide is hydroxypropylmethylcellulose.

5. A film according to any preceding claim, wherein the hydrophobic material is an edible oil or wax.

6. A film according to claim 5 wherein the hydrophobic material is an esterified glyceride.

7. A film according to claim 6 wherein the glyceride is acetylated monoglyceride.

8. A film according to any preceding claim wherein the film comprises from 3.5 to 60% protein, from 3.5 to 60% polysaccharide, and from 0 to 40% plasticiser, said percentages being by weight of the uncoated film.

9. A film according to any preceding claim wherein the hydrophobic material is present in an amount of from 10 to 50 g/m².

10. A food product comprising a domain of comparatively high moisture content and a domain of lower moisture content, said domains having a film according to any preceding claim disposed therebetween.

11. A food product according to claim 10 wherein the domain of lower moisture content comprises pastry.

## Patentansprüche

1. Film, umfassend ein eßbares, unlösliches faserartiges Protein oder modifiziertes faserartiges Protein und ein eßbares Polysaccharid, wobei der Film auf mindestens einem Teil seiner Oberfläche einen Überzug eines eßbaren hydrophoben Materials aufweist.

2. Film nach Anspruch 1, wobei das faserartige Protein Collagen ist.

3. Film nach einem der vorhergehenden Ansprüche, wobei das Polysaccharid ausgewählt ist aus geladenen Polysacchariden, Gummis und modifizierten Cellulosen.

4. Film nach Anspruch 3, wobei das Polysaccharid Hydroxypropylmethylcellulose ist.

5. Film nach einem der vorhergehenden Ansprüche, wobei das hydrophobe Material ein eßbares Öl oder Wachs ist.

6. Film nach Anspruch 5, wobei das hydrophobe Material ein verestertes Glycerid ist.

7. Film nach Anspruch 6, wobei das Glycerid acetyliertes Monoglycerid ist.

8. Film nach einem der vorhergehenden Ansprüche, wobei der Film 3,5 bis 60 % Protein, 3,5 bis 60 % Polysaccharid und 0 bis 40 % Weichmacher umfaßt, wobei diese Prozentangaben Gewichtsprozent des unbeschichteten Filmes sind.

9. Film nach einem der vorhergehenden Ansprüche, wobei das hydrophobe Material in einer Menge von 10 bis 50 g/m² vorliegt.

10. Lebensmittelerzeugnis, umfassend einen Bereich mit vergleichsweise hohem Feuchtigkeitsgehalt und einen Bereich mit niedrigerem Feuchtigkeitsgehalt, wobei zwischen diesen Bereichen ein Film nach einem der vorhergehenden Ansprüche angeordnet ist.

11. Lebensmittelerzeugnis nach Anspruch 10, wobei der Bereich mit niedrigerem Feuchtigkeitsgehalt Teig umfaßt.

## Revendications

1. Pellicule comprenant une protéine fibreuse insoluble ou une protéine fibreuse modifiée, comestible et un polysaccharide comestible, ledit film ayant un revêtement d'une matière hydrophobe comestible sur au moins une portion de sa surface.

2. Pellicule selon la revendication 1, dans laquelle la protéine fibreuse est du collagène.

3. Pellicule selon l'une quelconque des revendications précédentes, dans laquelle le polysaccharide est choisi parmi les polysaccharides chargés, les gommes et les celluloses modifiées.

4. Pellicule selon la revendication 3, dans laquelle le polysaccharide est l'hydroxypropylméthylcellulose.

5. Pellicule selon l'une quelconque des revendications précédentes, dans laquelle la matière hydrophobe est une huile ou une cire comestible.

6. Pellicule selon la revendication 5, dans laquelle la matière hydrophobe est un glycéride estérifié.

7. Pellicule selon la revendication 6, dans laquelle le glycéride est un monoglycéride acétylé.

8. Pellicule selon l'une quelconque des revendications précédentes, dans laquelle la pellicule comprend de 3,5 à 60% de protéine, de 3,5 à 60% de polysaccharide et de 0 à 40% de plastifiant, lesdits pourcentages étant en poids du film non revêtu.

9. Pellicule selon l'une quelconque des revendications précédentes, dans laquelle la matière hydrophobe est présente à raison de 10 à 50 g/m².

10. Produit alimentaire comprenant un domaine de teneur en humidité comparativement élevée et un domaine de teneur en humidité inférieure, lesdits domaines ayant une pellicule selon l'une quelconque des revendications précédentes disposée entre eux.

11. Produit alimentaire selon la revendication 10, dans lequel le domaine de teneur en humidité inférieure se comprend une pâte.
